# EUROPÄISCHE PATENTSCHRIFT

(11) **EP 1 044 851 B1**
(45) Veröffentlichungstag und Bekanntmachung des Hinweises auf die Patenterteilung: **15.09.2004**
(21) Anmeldenummer: 00101548.6
(22) Anmeldetag: 27.01.2000
(51) Int. Cl.: B60R 16/02

(54) **Vorrichtung für einen Powerring**
Apparatus for a power ring
Dispositif pour un anneau de puissance

(30) Priorität: 12.04.1999 DE 19916452
(43) Veröffentlichungstag der Anmeldung: 18.10.2000
(73) Patentinhaber: Rheinmetall Landsysteme GmbH, 24159 Kiel (DE)
(72) Erfinder: Jöhnke, Volker, 24214 Gettorf (DE); Hernekamp, Christoph, Dr., 24229 Strande (DE)
(74) Vertreter: Dietrich, Barbara

(56) Entgegenhaltungen:
- EP-A- 0 895 899
- DE-A- 19 811 626
- US-A- 5 675 189

## Beschreibung

Die Erfindung betrifft eine Vorrichtung für eine Ringleitung nach den Merkmalen des Oberbegriffs des Patentanspruches 1.

Eine derartige Vorrichtung ist aus der DE 198 11 626 A1 bekannt.

Die Versorgung von Geräten mit elektrischer Energie maßgeblich von Einzelkomponenten als Verbraucher von elektrischer Leistung in einem Fahrzeug, insbesondere in einem militärischen Ketten- oder Radfahrzeug erfolgt in zunehmenden Maß über eine Ringleitung, einen sogenannten Powerring, bei dem im Gegensatz zu einem sternförmigen Anschluß eines jeden Verbrauchers an einen Generator eine Ringleitung, die die Leistungsenergie transportiert, jeden elektrischen Verbraucher mit dem Stromerzeuger oder dem Generator verbindet.

Ein Kurzschluß auf der Ringleitung hat zur Folge, daß alle an dem Powerring angeschlossenen Verbraucher nicht mehr versorgt werden. Üblicherweise wird dann eine Reparaturwerkstatt aufgesucht und der Fehler behoben. In speziellen Anwendungsfällen bei militärischen Fahrzeugen kann es jedoch unerwünscht sein, daß die interne Stromversorgung durch einen einfachen Kurzschluß für alle angeschlossenen Geräte ausfällt.

Bisherige Lösungen sehen vor, den Powerring mittels Powerring-Controller in einzelne Segmente zu unterteilen. Die versorgten Geräte sind über Abgriffe am Powerring an den Segmenten des Powerrings angeschlossen. Bei einem Kurzschluß an einem Segment werden dann nur die Geräte, die an diesem Segment angeschlossen sind, von dem Kurzschluß beeinträchtigt und fallen aus. Die an den anderen Segmenten des Powerrings angeschlossenen Geräte werden weiterhin versorgt und bleiben weiterhin funktionsfähig.

Bei der DE 197 33 760 wird hinsichtlich eines Datenbus zur Informationsübertragung dargestellt, daß an der Busleitung an Knoten angeschlossene Sende- und Empfangskomponenten einen Abschlußwiderstand an jedem Knoten einschalten können und weitere Schalter am Knoten eingelegt werden können, so daß ein am Knoten angeschlossenes Gerät bei Ausfall aus der Busleitung geschaltet werden kann und der übrige Busbetrieb durch diesen Ausfall eines Knotens nicht beeinträchtigt wird.

Die bekannten Lösungen weisen den Nachteil auf, daß durch das Aufteilen der Ringleitung in Ringsegmente mit Hilfe der Ringleitung-Controller im Fehlerfall das fehlerhafte Ringleitung-Segment abgeschaltet wird und dies zur Folge hat, daß die an diesem Segment angeschlossenen Geräte nicht mehr versorgt werden. Bei einer geringen Anzahl von Segmenten und damit Controllern und gleicher Geräteanzahl wird der Nachteil noch größer, da nun eine relativ größere Anzahl von Geräten mit einem Segment ausfällt, da pro Segment eine größere Anzahl Geräte versorgt wird.

Abhilfe für den Geräteausfall bei Einzelfehlern könnte auch die redundant doppelt ausgeführte Vorrichtung einer als Powerring ausgebildeten Ringleitung sein. Diese ist jedoch aufwendig und störanfällig, da eine weitere Ausfallsensierung dargestellt werden muß und die Anzahl der Ringleitungskomponenten verdoppelt wird.

Aus der DE 198 11 626 A1 ist u. a. bekannt, ausgehend von einer als Stromeinspeisung ausgebildeten Hauptstromverteilungseinheit diese über Signalleitungen und Stromverteilereinheiten mit Verbrauchern schleifenförmig zu verbinden. Beim Ausfall eines Leitungssegmentes werden die in der Leitung in Reihe hintereinander geschalteten Verbrauchergeräte ausgehend von jedem der zwei Anschlüsse der Stromeinspeisung beidseitig bis zur Störstelle mit Strom versorgt. Beim Ausfall der zur Hauptstromverteilungseinheit benachbart liegenden Stromverteilereinheiten oder Leitungssegmente oder der einzigen Stromeinspeisung werden jedoch die in der Schleife hintereinander angeordneten Verbraucher nicht mehr mit Strom versorgt.

Aufgabe der Erfindung ist es, einen Kurzschluß am Powerring (Ringleitung) in seiner Auswirkung so begrenzt zu halten, daß nur wenige angeschlossene Geräte ausfallen bzw. daß möglichst viele Geräte durch einen einfachen Kurzschluß nicht beeinträchtigt werden. Es soll eine einfache Möglichkeit gefunden werden, trotz Ausfall eines auch als Verbindungsleitung angesehenen Powerring-Segments alle Geräte weiter zu versorgen, zumindest für den 1. Fehlerfall (Einfehlerfall).

Diese Aufgabe wird durch die Merkmale des Anspruchs 1 gelöst. Weitere vorteilhafte Ausgestaltungen der Erfindung offenbaren die Unteransprüche.

Erfindungsgemäß wird die Ringleitung mit ihren Bauelementen so ausgestaltet, daß der Abgriff für die elektrische Einspeisung oder der Abgriff für ein Gerät mit einem Steuerknoten baulich zu einem Abgriff- Controller bzw. zu einer Systemeinheit zusammengefaßt werden. Die so gebildeten Abgriff Controller werden mit Leitungen als Ringleitung so zusammengeschaltet, daß die zu versorgenden Geräte und Stromeinspeisungen nur noch an *den Abgriff- Controllern* angeschlossen werden. Wird jetzt im Fehlerfall ein Segment des Powerrings, das zwischen zwei Abgriff- Controllern liegt, abgeschaltet, so können weiterhin alle Geräte, die an den Abgriff-Controllern angeschlossen sind, versorgt werden. Sofern der Fehler nur die Ringleitung betrifft, werden damit weiterhin alle Geräte versorgt, da diese nur an den Abgriff-Controllern angeschlossen sind und die Ringleitung über den Restring weiterhin geschlossen ist. Erst bei einem Ausfall eines Abgriff-Controllers wird ein Teil der Geräte, die an diesem Controller angeschlossen sind, nicht mehr versorgt. Dies würde auch bei zwei Leitungsfehlern eintreten. Bei einem ersten Leitungsfehler oder isolierten Einzelfehler werden jedoch weiterhin alle Geräte bei der erfindungsgemäßen Ausbildung weiterversorgt.

Ausführungsbeispiele der Erfindung sind in den Figuren schematisch dargestellt. Es zeigen:
- Figur 1:: einen Abgriff-Controller
- Figur 2:: einen Powerring mit Abgriff-Controllern
- Figur 3:: einen Powerring mit Abgriff-Controllern bei Kurzschluß

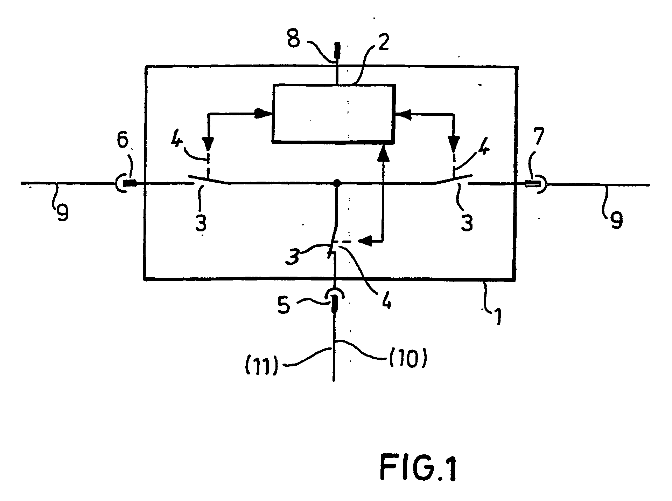

Nach der Figur 1 besteht der Abgriff-Controller 1 aus einem intelligenten Steuerknoten 2, zwei steuerbaren Leistungstrennern 3 mit Überstromsensierung und einem steuerbaren Leitungsschutz mit Statusmeldung 4. Über einen Anschluß 5 wird ein zu versorgendes Gerät 11 oder die Einspeisung 10 für den Powerring, der als Ringleitung 9 mittels Steckern 6, 7 am Abgriff-Controller jeweils angeschlossen ist, wahlweise und je nach Einsatzzweck mit dem Abgriff-Controller 1 verbunden. Der Datenanschluß 8 verbindet den Abgriff-Controller 1 mit einem übergeordneten Steuerrechner für einen erforderlichen Datenaustausch.

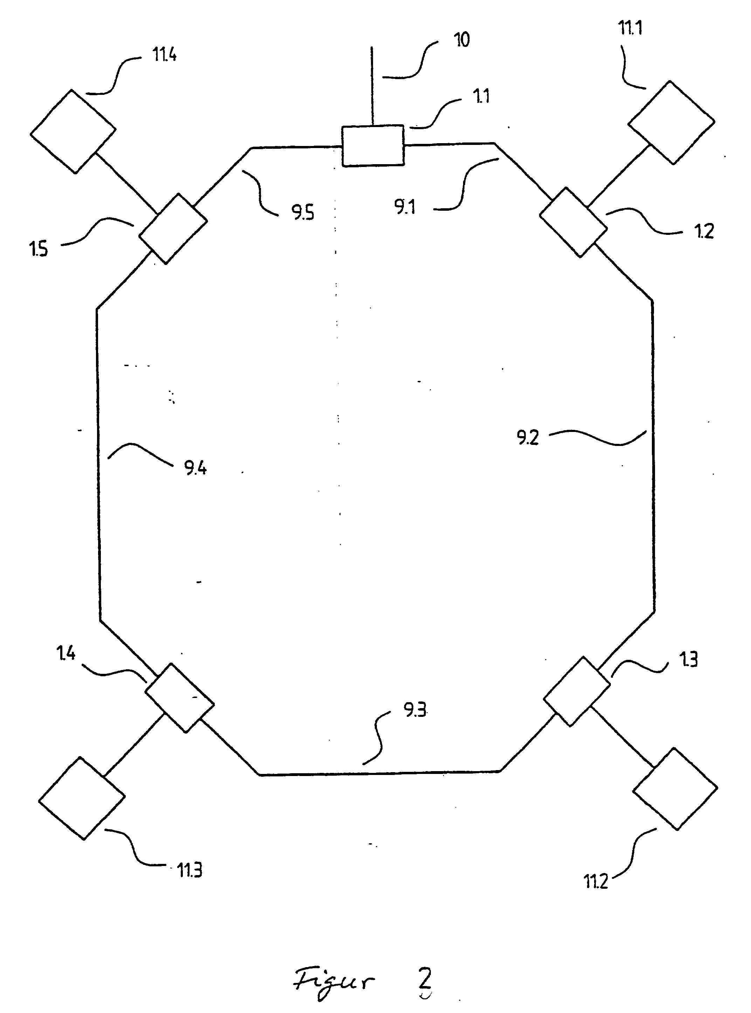

In der Figur 2 wird der Powerring 9 in einem prinzipiellen Beispiel aus den Ringsegmenten (Ringleitungssegment) 9.1, 9.2, 9.3, 9.4, 9.5 gebildet. Am Ring verteilt sind die Abgriff-Controller 1.1, 1.2, 1.3, 1.4, 1.5 angeschlossen. Der Powerring wird über die Leitung 10 und den Controller 1.1 mit Energie versorgt. An den Abgriff-Controllern 1.2, 1.3, 1.4, 1.5 sind jeweils elektrische Geräte 11.1, 11.2, 11.3, 11.4 als Verbraucher angeschlossen, die aus dem Powerring versorgt werden.

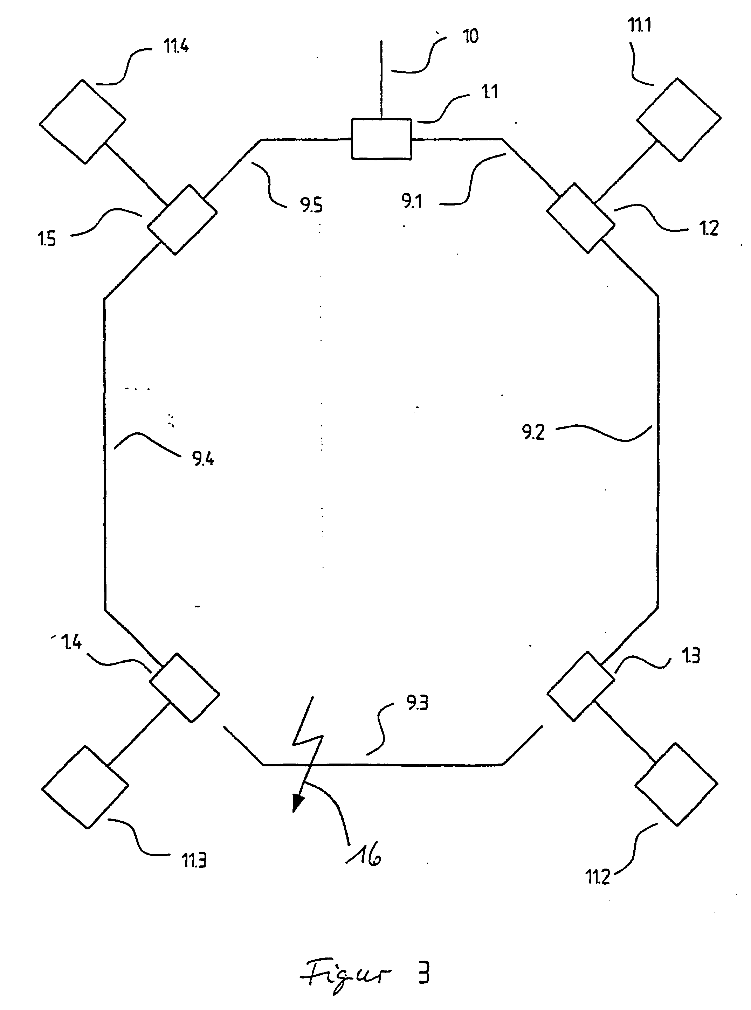

In der Figur 3 ist der in der Figur 2 dargestellte Powerring mit einem Kurzschluß 16 als Symbol zwischen den Abgriff-Controllern 1.3 und 1.4 am Ringsegment 9.3 dargestellt. In diesem Fehlerfall wird das Powerring-Segment 9.3 von den Abgriff-Controllern 1.3 und 1.4 detektiert und abgeschaltet, so daß es keine Verbindung mehr zu dem übrigen Powerring besitzt. Bei diesem Fehler werden alle angeschlossenen Geräte 11.1 bis 11.4 weiterhin mit Strom versorgt

Auch bei Auftreten dieses Fehlers an einem beliebigen anderen Ringsegment würden weiterhin alle Geräte mit Strom versorgt. Erst bei Auftreten eines zweiten Fehlers würden nicht mehr alle Geräte mit Strom versorgt werden können. Bei einer weiteren Ausgestaltung könnten mehrere Energieeinspeisestellen 10, neben der dargestellten vorgesehen werden.

Mittels je einem Datenanschluß 8 (in Figur 2, 3 nicht dargestellt) sind die Abgriff-Controller mit einem übergeordneten Steuerrechner verbunden, der den Powerring überwacht.

### Bezugszeichenliste

- 1.: Abgriff-Controller
1.1. Abgriff-Controller
1.2. Abgriff-Controller
1.3. Abgriff-Controller
1.4. Abgriff-Controller
1.5. Abgriff Controller
- 2.: Steuerknoten
- 3.: Leistungstrenner
- 4.: Statusmedlung
- 5.: Anschluß
- 6.: Stecker
- 7.: Stecker
- 8.: Datenanschluß
- 9.: Ringleitung
9.1. Ringleitungssegment
9.2. Ringleitungssegment
9.3. Ringleitungssegment
9.4. Ringleitungssegment
9.5. Ringleitungssegment
- 10.: Einspeisung
- 11.: Gerät
11.1. Elektrische Gerät
11.2. Elektrische Gerät
11.3. Elektrische Gerät
11.4. Elektrische Gerät
- 12.: Kurzschluß

## Patentansprüche

1. Vorrichtung für eine Ringleitung (9) in einem militärischen Fahrzeug für die elektrische Versorgung von elektrischen Geräten als Verbraucher (11), bestehend aus mehreren Controllern (1) als Überwachungs- und Schalteinrichtungen, die entlang und an der Ringleitung (9) angeschlossen sind, und mehreren Abgriffen an der Ringleitung (9) für den Anschluß der elektrischen Geräte als Verbraucher an die Ringleitung (9) und Einspeisestellen an der Ringleitung (9) für die Einspeisung (10) der elektrischen Energie sowie Datenverbindungen zwischen den Controllern (1) und einem übergeordneten Steuerrechner zur Überwachung und Steuerung der Ringleitung (9), **dadurch gekennzeichnet, daß** der Controller ein Abgriff-Controller ist, der einen Anschluß (5) und einen Steuerknoten (2) sowie eine Anzahl gesteuerter Schalter (3) aufweist; Abgriff-Controller entlang der Ringleitung (9) mehrfach in die Ringleitung (9) zwischengeschaltet sind, so daß Ringleitungssegmente (9.1; 9.2; 9.3; 9.4; 9.5) zwischen den Abgriff-Controllern (1.1, 1.2; 1.3; 1.4; 1.5) bestehen, und ein oder mehrere elektrische Geräte als Verbraucher (11) oder eine Stromeinspeisung (10) an dem Abgriff-Controller (1.1, 1.2; 1.3; 1.4; 1.5) über den Anschluß (5) mit der Ringleitung verbunden sind, wobei über die gesteuerten Schalter (3), das jeweilige Ringleitungssegment links und/oder rechts von einem der Abgriff-Controller trenn- oder zuschaltbar ist und mit denen das elektrische Gerät als Verbraucher (11) oder die Einspeisung (10) vom Abgriff-Controller (1) trenn- oder zuschaltbar ist, so daß der Abgriff und die Einspeisestelle an der Ringleitung (9) jeweils mit einem Abgriff-Controller (1) baulich zusammengefaßt ist.

2. Vorrichtung nach Anspruch 1, **dadurch gekennzeichnet, daß** der Abgriff-Controller (1.1, 1.2; 1.3; 1.4; 1.5) eine intelligente Steuereinheit zum Anschluß sowohl eines elektrischen Geräts als Verbraucher (11), als auch einer Einspeisung (10) ist.

3. Vorrichtung nach Anspruch 1 und 2, **dadurch gekennzeichnet, daß** der Abgriff-Controller (1.1, 1.2; 1.3; 1.4; 1.5) Einrichtungen zur Überstromsensierung und für Leitungsschutz mit Statusmeldung besitzt.

4. Vorrichtung nach einem der Ansprüche 1 bis 3, **dadurch gekennzeichnet, daß** der Abgriff-Controller (1.1, 1.2; 1.3; 1.4; 1,5) eine Datenverbindung (8) zum Datenaustausch mit einem übergeordneten Steuergerät besitzt.

## Claims

1. Apparatus for a ring line in a military vehicle for supplying electricity to electrical appliances as loads (11), comprising two or more controllers (1) as monitoring and switching devices, which are connected along and to the ring line (9), and two or more taps on the ring line (9) for connection of the electrical appliances (11) as loads to the ring line (9) and feed points (10) on the ring line (9) for feeding in (10) the electrical power, as well as a data link between the controllers (1) and a higher-level control computer for monitoring and controlling the ring line (9), **characterized in that** the controller (1) is a tap controller, which has a connection (5) and control nodes (2) as well as a number of controlled switches (3), two or more tap controllers (1.1, 1.2, 1.3, 1.4, 1.5) are connected in between in the ring line (9) along the ring line (9), so that ring line segments (9.1, 9.2, 9.3, 9.4, 9.5) exist between the tap controllers (1.1, 1.2, 1.3, 1.4, 1.5), and one or more appliances are connected via the connection (5) to the ring line (9) as loads (11) or as a current feed (10) on the tap controller (1.1, 1.2, 1.3, 1.4, 1.5), in which case the respective ring line segment to the left and/or to the right of one of the tap controllers can be disconnected or connected via the controlled switches (3), and by means of which the electrical appliance can be disconnected or connected as a load (11) or the feed (10) by the tap controller (1), so that the tap and the feed point on the ring line (9) are each physically combined with the tap controller (1).

2. Apparatus according to Claim 1, **characterized in that** the tap controller (1.1, 1.2, 1.3, 1.4, 1.5) is an intelligent control unit for connection not only of an electrical appliance as a load (11) but also of a feed (10).

3. Apparatus according to Claims 1 and 2, **characterized in that** the tap controller (1.1, 1.2, 1.3, 1.4, 1.5) has devices for overcurrent sensing and for line protection, with status signalling.

4. Apparatus according to one of Claims 1 to 3, **characterized in that** the tap controller (1.1, 1.2, 1.3, 1.4, 1.5) has a data link (8) for interchanging data with a high-level control appliance.

## Revendications

1. Dispositif pour câble annulaire dans un véhicule militaire, destiné à l'alimentation électrique d'appareils électriques en tant que consommateurs (11), consistant en plusieurs contrôleurs (1) servant de dispositifs de surveillance et de commutation, qui sont raccordés le long du câble annulaire (9) et sur celui-ci, et en plusieurs capteurs sur le câble annulaire (9) pour le raccordement des appareils électriques (11) en tant que consommateurs au câble annulaire (9) et en des points d'alimentation (10) sur le câble annulaire (9) pour l'alimentation (10) en énergie électrique ainsi qu'une connexion de données entre les contrôleurs (1) et un calculateur de commande superposé servant à contrôler et à commander le câble annulaire (9), **caractérisé en ce que** le contrôleur (1) est un contrôleur de captage qui présente un raccordement (5) et un nodule de commande (2) ainsi qu'un certain nombre d'interrupteurs commandés (3), que des contrôleurs de captage (1.1, 1.2, 1.3, 1.4, 1.5) sont intercalés le long du câble annulaire (9) en plusieurs exemplaires dans le câble annulaire (9), de sorte qu'il existe des segments de câble annulaire (9.1, 9.2, 9.3, 9.4, 9.5) entre les contrôleurs de captage (1.1, 1.2, 1.3, 1.4, 1.5) et qu'un ou plusieurs appareils en tant que consommateurs (11) ou une alimentation en courant (10) sont reliés au contrôleur de captage (1.1, 1.2, 1.3, 1.4, 1.5) par le raccordement (5) au câble annulaire (9), le segment de câble annulaire respectif pouvant être séparé ou activé par les interrupteurs commandés (3) à gauche et/ou à droite d'un des contrôleurs de captage, et à l'aide desquels l'appareil électrique en tant que consommateur (11) ou l'alimentation (10) peuvent être séparés et activés par le contrôleur de captage (1), de sorte que le capteur et le point d'alimentation sur le câble annulaire (9) sont respectivement regroupés au niveau construction avec un contrôleur de captage (1).

2. Dispositif selon la revendication 1, **caractérisé en ce que** le contrôleur de captage (1.1, 1.2, 1.3, 1.4, 1.5) est une unité de commande intelligente pour le raccordement aussi bien d'un appareil électrique en tant que consommateur (11) que d'une alimentation (10).

3. Dispositif selon la revendication 1 et 2, **caractérisé en ce que** le contrôleur de captage (1.1, 1.2, 1.3, 1.4, 1.5) possède des systèmes de captage de surintensité et pour la protection de lignes avec un signalement d'état.

4. Dispositif selon l'une quelconque des revendications 1 à 3, **caractérisé en ce que** le contrôleur de captage (1.1, 1.2, 1.3, 1.4, 1.5) possède une connexion de données (5) pour l'échange de données avec un appareil de commande superposé.
